# EUROPÄISCHE PATENTSCHRIFT

(11) **EP 0 667 874 B1**
(45) Veröffentlichungstag und Bekanntmachung des Hinweises auf die Patenterteilung: **15.01.1997**
(21) Anmeldenummer: 94900084.8
(22) Anmeldetag: 29.10.1993
(51) Int. Cl.: C08F 8/00

(54) **UNLÖSLICHE, NUR WENIG QUELLBARE POLYMERISATE MIT AMINOGRUPPEN, VERAFHREN ZU IHRER HERSTELLUNG UND IHRE VERWENDUNG**
INSOLUBLE, SLIGHTLY-SWELLING POLYMERS WITH AMINO GROUPS, PROCESS FOR MAKING THEM AND THEIR USE
POLYMERISATS INSOLUBLES A GROUPES AMINO, A FAIBLE CAPACITE DE GONFLEMENT, LEUR PROCEDE DE FABRICATION ET LEUR UTILISATION

(30) Priorität: 06.11.1992 DE 4237439
(43) Veröffentlichungstag der Anmeldung: 23.08.1995
(73) Patentinhaber: BASF Aktiengesellschaft, 67063 Ludwigshafen (DE)
(72) Erfinder: HARTMANN, Heinrich, D-67117 Limburgerhof (DE); DENZINGER, Walter, D-67436 Speyer (DE); KROENER, Michael, D-68309 Mannheim (DE); NILZ, Claudia, D-67127 Roedersheim-Gronau (DE)
(86) Internationale Anmeldenummer: EP9303019
(87) Internationale Veröffentlichungsnummer: WO9411408

(56) Entgegenhaltungen:
- EP-A- 0 177 812
- EP-A- 0 185 935
- EP-A- 0 216 387
- EP-A- 0 262 577
- DE-A- 4 007 311
- US-A- 4 393 174

## Beschreibung

Die Erfindung betrifft unlösliche, nur wenig quellbare Polymerisate mit Aminogruppen, Verfahren zu ihrer Herstellung durch Popcornpolymerisation von offenkettigen N-Vinylcarbonsäureamiden und Hydrolyse der einpolymerisierten N-Vinylcarbonsaureamide zu Vinylamineinheiten, sowie die Verwendung der hydrolysierten Popcorn-Polymerisate als Ionenaustauscher.

Aus der DE-C-2 255 263 ist ein Verfahren zur Herstellung von unlöslichen vernetzten nur wenig quellbaren Polymerisaten des N-Vinylpyrrolidons bekannt, bei dem man N-Vinylpyrrolidon in wäßriger Lösung in Gegenwart von 0,5 bis 10 Gew.-%, bezogen auf N-Vinylpyrrolidon, eines cyclischen Saureamids, das mindestens zwei ethylenisch ungesättigte Gruppen enthält und von denen mindestens eine am Amidstickstoff gebunden ist, als Vernetzer polymerisiert. Die Polymerisationsreaktion wird dabei durch Erhitzen der Reaktionslösung auf mindestens 80°C gestartet und bei der Siedetemperatur des Wassers zu Ende geführt.

Die US-A-3 277 066 betrifft ein Verfahren zur Herstellung von unlöslichen Polymerisaten von N-Vinyllactamen durch Erhitzen von N-Vinyllactamen in Gegenwart von Oxiden und Hydroxiden von Alkalimetallen oder Erdalkalimetallen als Katalysator und Wasser. Die Polymerisation wird bei höherer Temperatur gestartet, z.B. bei 140°C, und anschließend bei einer tieferen Temperatur (100°C) fortgeführt.

Aus der US-A-4 451 582 ist ein Verfahren zur Herstellung von unlöslichen, in Wasser nur wenig quellbaren, körnigen Polymerisaten aus basischen Vinylheterocyclen mit einem pKa-Wert von mehr als 4 und deren Copolymerisaten mit bis zu 30 Gew.-% copolymerisierbarer Monomerer bekannt, bei dem man die Monomeren in Gegenwart von 0,1 bis 10 Gew.-%, bezogen auf die Gesamtmonomermenge, eines Vernetzers unter Ausschluß von Sauerstoff und Polymerisationsinitiatoren polymerisiert. Die Polymerisate werden vorzugsweise durch Fällungspolymerisation in Wasser hergestellt. Sie können jedoch auch in Abwesenheit von Lösemitteln für die Monomeren durch Erhitzen der Monomeren auf Temperaturen von vorzugsweise 150 bis 180°C erhalten werden. Diese Reaktion ist allerdings schlecht kontrollierbar und ergibt nur geringe Raum-Zeit-Ausbeuten und relativ stark verunreinigte Produkte.

Aus der EP-A-0 088 964 ist ein Verfahren zur Herstellung von unlöslichen, in Wasser nur wenig quellbaren, körnigen Polymerisaten bekannt, wobei man Monomere eines basischen Vinylheterocyclus wie Vinylimidazol, Vinylpyridine oder N-Vinyllactame unter Ausschluß von Sauerstoff und Polymerisationsinitiatoren in Gegenwart von 0,1 bis 10 Gew.-%, bezogen auf die Gesamtmonomermenge, eines Vernetzers polymerisiert. Die so erhältlichen Polymerisate werden z.B. als Ionenaustauscher oder zur adsorptiven Immobilisierung von Enzymen verwendet.

Es ist außerdem bekannt, unlösliche, nur wenig quellbare Polymerisate der Acrylsäure, sog. Popcorn-Polymerisate, durch Polymerisieren von Acrylsäure in wäßriger Lösung in Gegenwart von geringen Mengen an 2,2'-Azobisiso-butyronitril herzustellen, vgl. J.W. Breitenbach et al., Makromol. Chemie 177, (1976), 2787 bis 2792. Dabei entstehen jedoch Polymermischungen, die als Hauptbestandteil ein glasiges Polymer (Gel) und in untergeordneten Mengen Popcornpolymere der Acrylsäure enthalten. Die Trennung der Polymergemische ist in der Technik nicht mit vertretbarem Aufwand durchzuführen .

Aus Houben-Weyl, Band 14, Makrom. Stoffe, Teil 1, (1961), Seite 98 ist bekannt, daß aus Gemischen von Styrol mit Divinylbenzol Popcorn-Polymere gebildet werden. Derartige Polymerisate entstehen auch bei der technischen Butadien-Styrol-Polymerisation. Auch Acrylsäuremethylester neigt zur Bildung von Popcorn-Polymeren. Popcorn-Polymere haben die Eigenschaften, daß sie bei Kontakt mit den Monomeren, aus denen sie bestehen oder mit anderen Monomeren, diese in Popcorn-Polymerisate verwandeln können. Sie wirken sozusagen als Keim für die Polymerisation. Die Aktivität geht jedoch verloren, wenn sie mit Luft in Berührung kommen.

Aus Ullmanns Encyklopädie der Techn. Chemie, 4. Aufl. Band 19, 1980, Seite 385, ist bekannt, daß beim Erhitzen von N-Vinylpyrrolidon mit Hydroxiden und Alkoholaten der Alkali- und Erdalkali-Metalle in spontaner Reaktion ein unlösliches, in Wasser schwach quellbares Polymerisat gebildet wird. Solche als Popcorn-Polymerisate bezeichneten Stoffe entstehen auch beim Erhitzen von N-Vinylpyrrolidon mit Divinyl-Verbindungen unter Ausschluß von Sauerstoff. In Abwesenheit von Basen dauert es in der Regel mehrere Stunden, bevor die Popcorn-Polymerisation überhaupt beginnt.

Aus der EP-B-0 071 050 und der EP-A-0 216 387 sind wasserlösliche Homopolymerisate bzw. Copolymerisate bekannt, die Vinylamineinheiten einpolymerisiert enthalten.

Aus der EP-B-0 177 812 ist ein Verfahren zur Herstellung von unlöslichen, nur wenig quellbaren, pulverförmigen Polymerisaten auf Basis von monoethylenisch ungesättigten Carbonsäureamiden, Carbonsäuren und Carbonsäureestern bekannt, bei dem man zum Starten der Polymerisation ein aktives Popcornpolymerisat verwendet, das durch Erhitzen einer Mischung aus 99,6 bis 98,8 Gew.-% N-Vinylpyrrolidon-2 und 0,4 bis 1,2 Gew.-% einer mindestens 2 ethylenisch ungesättigten Doppelbindung aufweisenden Verbindung als Vernetzer auf eine Temperatur in dem Bereich von 100 bis 150°C in Abwesenheit von Sauerstoff und Polymerisationinitiatoren erhältlich ist. Sobald das aktive Popcornpolymerisat gebildet ist, wird darin eine Mischung aus
(a) 99,9 bis 90 Gew.-% mindestens einer Verbindung aus der Gruppe der N-Vinylcarbonsaureamide, Acrylamid, Methacrylamid, Acrylsäure, Methacrylsaure, Acrylsäureester, Methacrylsäureester und/oder Vinylester und
(b) 0,1 bis 10 Gew.-%, bezogen auf die gesamten Monomeren, einer mindestens 2 ethylenisch ungesättigte, nicht konjugierte Doppelbindung aufweisenden Verbindung als Vernetzer
in einem Pulverbett in Gegenwart eines Wärmeübertragungsmittels, das gegenüber den Reaktionsteilnehmer inert ist, bei Temperaturen von 90 bis 220°C unter Aufrechterhaltung des Pulverzustands, Umwälzung der Reaktionsmasse und Verdampfen des Wärmeübertragungsmittels aus der Polymerisationszone unter Ausschluß von Sauerstoff und Polymerisationinitiatoren polymerisiert.

Diese Popcorn-Polymerisate werden beispielsweise zur Absorption von Gerbstoffen aus Getränken und als Ionenaustauscher verwendet. Carboxylgruppenhaltige Popcornpolymerisate können auch durch Verseifung von Acrylester- und Acrylamideinheiten enthaltenden Polymerisaten erhalten werden.

Der vorliegenden Erfindung liegt die Aufgabe zugrunde, neue Stoffe zur Verfügung zu stellen, die als Ionenaustauscher mit Aminogruppen verwendbar sind.

Die Aufgabe wird erfindungsgemäß gelöst mit unlöslichen, nur wenig quellbaren Polymerisaten mit Aminogruppen, die aus Popcorn-Polymerisaten, die Einheiten der Struktur 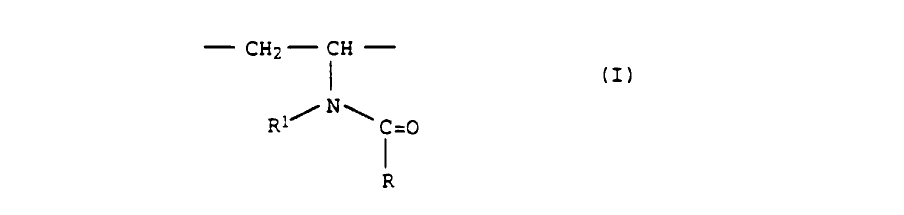 enthalten, in der R, R¹ = H oder C₁- bis C₄-Alkyl bedeuten, durch Abspaltung der Gruppe 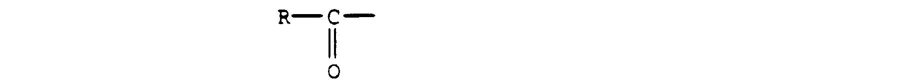 aus mindestens 2 % der einpolymerisierten Einheiten der Struktur I unter Ausbildung von Einheiten der Struktur 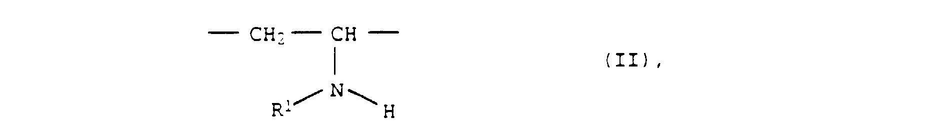 in der R¹ = H oder C₁- bis C₄-Alkyl ist, erhältlich sind.

Gegenstand der Erfindung ist außerdem ein Verfahren zur Herstellung von unlöslichen, nur wenig quellbaren Polymerisaten mit Aminogruppen, das dadurch gekennzeichnet ist, daß man
(a) N-Vinylcarbonsäureamide der Formel 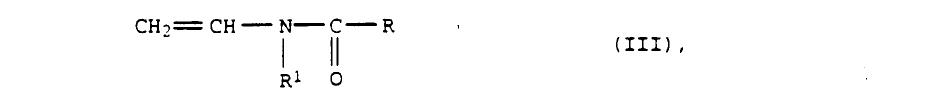 in der R, R¹ = H oder C₁- bis C₄-Alkyl bedeuten, und gegebenenfalls
(b) andere, damit copolymerisierbare monoethylenisch ungesättigte Monomere mit
(c) 0,1 bis 10 Gew.-%, bezogen auf die bei der Polymerisation eingesetzten Monomeren (a) und (b), einer mindestens zwei ethylenisch ungesättigte Doppelbindungen enthaltenden Verbindung als Vernetzer
unter Ausschluß von Sauerstoff und Polymerisationsinitiatoren zu Popcorn-Polymerisaten polymerisiert und aus mindestens 2 % der einpolymerisierten N-Vinylcarbonsaureamide der Formel III die Gruppe 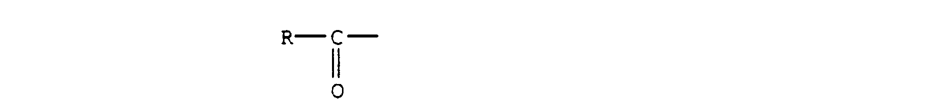 durch Einwirkung von Enzymen, Säuren oder Basen abspaltet. Die so erhältlichen unlöslichen, nur wenig quellbaren Polymerisate mit Aminogruppen werden als Ionenaustauscher oder Adsorberharz für Metallionen verwendet.

Die erfindungsgemäßen Polymerisate werden nach einem zweistufigen Verfahren hergestellt. In der ersten Verfahrensstufe stellt man nach bekannten Methoden Popcorn-Polymerisate her, die dann in der zweiten Verfahrensstufe mit Enzymen, Säuren oder Basen behandelt und dadurch in Aminogruppen enthaltende Popcorn-Polymerisate übergeführt werden. Als Komponente (a) zur Herstellung der bekannten Popcorn-Polymerisate verwendet man N-Vinylcarbonsaureamide der Formel 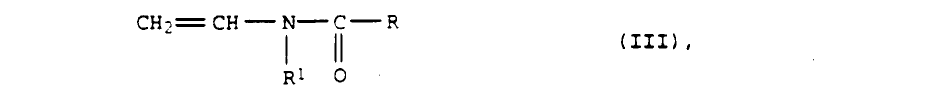 in der R und R¹ = H oder C₁- bis C₄-Alkyl bedeuten.

Geeignete Verbindungen der Formel III sind beispielsweise N-Vinylformamid, N-Vinyl-N-methylformamid, N-Vinylacetamid, N-Vinyl-N-methylacetamid, N-Vinyl-N-ethylformamid, N-Vinyl-N-n-propylformamid, N-Vinyl-N-isopropylformamid, N-Vinyl-N-isobutylformamid, N-Vinyl-N-methylpropionamid, N-Vinyl-n-butylacetamid und N-Vinyl-N-methylpropionamid. Vorzugsweise verwendet man aus dieser Gruppe von Monomeren N-Vinylformamid.

Als Monomere der Gruppe (b), die gegebenenfalls bei der Herstellung der Popcorn-Polymerisate mitverwendet wird, handelt es sich um andere, mit den Monomeren der Gruppen (a) und (c) copolymerisierbare monoethylenisch ungesättigte Monomere. Hierzu gehören beispielsweise Acrylamid, Methacrylamid, Acrylsäure, Methacrylsäure, Acrylsäureester, Methacrylsäureester und/oder Vinylester. Die Acrylsäure- und Methacrylsäureester leiten sich vorzugsweise von gesättigten, einwertigen Alkoholen mit 1 bis 4 Kohlenstoffatomen bzw. gesättigten zweiwertigen 2 bis 4 Kohlenstoffatome enthaltenden Alkoholen ab. Beispiele für diese Ester sind Acrylsäuremethylester, Methacrylsäuremethylester, Acrylsäureethylester, Methacrylsäureethylester, Acrylsäure-n-propylester, Methylacrylsäure-n-propylester, Acrylsäureisopropylester, Methylacrylsäureisopropylester und die Ester der Acrylsäure- und Methacrylsäure, die sich von den Isomeren Butanolen ableiten, sowie Hydroxyethylacrylat, Hydroxyethylmethacrylat, Hydroxypropylacrylat, Hydroxypropylmethacrylat, Hydroxybutylacrylat, Hydroxyisobutylacrylat und Hydroxyisobutylmethacrylat. Von den Vinylestern kommen vorzugsweise Vinylacetat und Vinylpropionat in Betracht. Weitere geeignete Monomere der Gruppe (b) sind Acrylnitril, Methacrylnitril, N-Vinylpyrrolidon, N-Vinylcaprolactam, 1-Vinylimidazol, 2-Methyl-1-vinylimidazol und 4-Methyl-1-vinylimidazol. Die Monomeren der Gruppe (b) können allein oder auch in Mischung untereinander zusammen mit den Monomeren der Gruppen (a) und (c) polymerisiert werden. Von den Monomeren der Gruppe (b) eignet sich vor allem N-Vinylpyrrolidon zur Herstellung von Popcorn-Polymerisaten. Die Popcornpolymerisation kann beispielsweise durch Erhitzen von N-Vinylpyrrolidon und geringen Mengen, z.B. 0,4 bis 1,2 Gew.-% eines Vernetzers wie N,N'-Divinylethylenharnstoff, in wäßrigem Medium von Gegenwart von Alkali gestartet werden. Zum Starten der Popcornpolymerisation verwendet man vorzugsweise frisch destilliertes N-Vinylpyrrolidon-2. Die Popcornpolymerisation gelingt besonders leicht mit N-Vinylpyrrolidon in dem Temperaturbereich von etwa 100 bis 150°C in Abwesenheit von Sauerstoff und Polymerisationsinitiatoren.

Die Monomeren der Gruppe (b) sind, sofern sie bei der Herstellung der Popcorn-Polymerisate mitverwendet werden, zu 0,1 bis 80 Gew.-% in der Monomermischung aus (a) und (b) vorhanden.

Als Monomere der Gruppe (c) werden bei der Polymerisation Verbindungen eingesetzt, die mindestens 2 ethylenisch ungesättigte nichtkonjugierte Doppelbindungen im Molekül als Vernetzer enthalten. Besonders geeignet sind beispielsweise Alkylenbisacrylamide wie Methylenbisacrylamid und N,N'-Acryloylethylendiamin, N,N'-Di-vinylethylenharnstoff, N,N'-Divinylpropylenharnstoff, Ethyliden-bis-3-(N-vinylpyrrolidon), N,N'-Divinyldiimidazolyl (2,2') butan und 1,1'-bis-(3,3'-vinylbenzimidazolith-2-on)1,4-butan. Andere geeignete Vernetzer sind beispielsweise Alkylenglykoldi(meth)acrylate wie Ethylenglykoldiacrylat, Ethylenglykoldimethacrylat, Tetraethylenglykolacrylat, Tetraethylenglykoldimethacrylat, Di-ethylenglykolacrylat, Diethylenglykolmethacrylat, aromatische Di-vinylverbindungen wie Divinylbenzol und Divinyltoluol sowie Vinylacrylat, Allylacrylat, Allylmethacrylat, Divinyldioxan, Pentaerythrittriallylether sowie Gemische der Vernetzer. Die Vernetzer werden in Mengen von 0,1 bis 10, vorzugsweise 1 bis 4 Gew.-%, bezogen auf die bei der Polymerisation eingesetzten Monomeren (a) und (b) angewendet.

Die Popcornpolymerisation wird nach bekannten Verfahren durchgeführt, z.B. als Fällungspolymerisation oder durch Polymerisieren in Substanz. Bevorzugt ist eine Arbeitsweise, bei der man, wie in der EP-B-0 177 812 beschrieben - die Popcornpolymerisation dadurch startet, daß man eine Mischung aus 99,6 bis 98,8 Gew.-% N-Vinylpyrrolidon und 0,4 bis 1,2 Gew.-% einer mindestens 2 ethylenisch ungesättigte Doppelbindungen aufweisenden Verbindung als Vernetzer auf eine Temperatur in dem Bereich von 100 bis 150°C in Abwesenheit von Sauerstoff und Polymerisationsinitiatoren erhitzt. Diese Polymerisation wird insbesondere durch Anwesenheit geringer Mengen an Natronlauge oder Kalilauge initiiert. Innerhalb einer kurzen Zeit bildet sich ein polymerisationsfähiges Popcornpolymerisat, das bei Zugabe geeigneter anderer Monomermischungen, d.h. der Monomeren der Gruppe (a) und gegebenenfalls (b) und weitere Zugabe der Monomeren (c) die Popcornpolymerisation dieser Monomeren ohne Induktionsperiode startet.

Um die Popcornpolymerisation ohne Lösemittel durchzuführen, wird das Monomergemisch aus (a) und (c) sowie gegebenenfalls (b) durch Einleiten von Stickstoff inertisiert und anschließend auf eine Temperatur in dem Bereich von 100 bis 200, vorzugsweise 150 bis 180°C erhitzt. Es ist vorteilhaft, auch während der Polymerisation weiter einen schwachen Stickstoffstrom durch die Monomeren zu leiten. Ausschluß von Sauerstoff wird auch dadurch erreicht, daß man den Ansatz bei einem Druck polymerisiert, der unter dem Atmosphärendruck liegt una bei dem die Monomeren sieden. Je nach Art der eingesetzten Monomeren und der gewählten Temperatur polymerisiert die Mischung innerhalb von 1 bis 20 Stunden. Beispielsweise bilden sich bei der Polymerisation von N-Vinylamiden mit 2 % N,N'-Divinylethylenharnstoff bei 150°C unter Rühren mit einem kräftigen Rührwerk und einem Druck von 310 mbar nach 2,5 Stunden die ersten Polymerisatteilchen, deren Menge langsam zunimmt, bis nach 10 Stunden Polymerisationszeit das Reaktionsgemisch aus einem Pulver besteht. Das Popcornpolymerisat wird daraus in Ausbeuten von über 90 % in Form eines Pulvers mit einer durchschnittlichen Teilchengröße von etwa 10 µm bis 5 mm, vorzugsweise 10 µm bis 500 µm erhalten.

Zur Herstellung der Popcorn-Polymerisate wird die Fällungspolymerisation in Wasser bevorzugt. Die Konzentration der Monomeren wird dabei zweckmäßigerweise so gewählt, daß das Reaktionsgemisch über die gesamte Reaktionsdauer hinweg gut gerührt werden kann. Bei einer zu hohen Konzentration der Monomeren in Wasser, z.B. bei 95 %, werden die Polymerisatkörner klebrig, so daß ein Rühren schwieriger wird als in Abwesenheit von Wasser. Um die Reaktion in den üblichen Rührkesseln durchzuführen, wählt man Monomerkonzentrationen, bezogen auf die wäßrige Mischung, von etwa 5 bis 30, vorzugsweise 10 bis 20 Gew.-%. Falls kräftigere Rührwerke zur Verfügung stehen, kann die Monomerkonzentration der wäßrigen Lösung auch bis auf 50 Gew.-%, gegebenenfalls auch darüber erhöht werden. In einigen Fällen kann es zweckmäßig sein, die Popcornpolymerisation mit einer relativ konzentrierten Lösung zu beginnen und dann im Verlauf der Reaktion Wasser zur Verdünnung zuzusetzen. Die Popcornpolymerisation wird bevorzugt bei pH-Werten oberhalb von 6 durchgeführt, um eine eventuell mögliche Verseifung der Monomeren (b) und/oder (c) zu vermeiden. Die Einstellung des pH-Wertes kann durch Zugabe geringer Mengen an Basen wie Natriumhydroxid oder Ammoniak oder der üblichen Puffersalze wie Soda, Natriumhydrogencarbonat oder Natriumphosphat erfolgen. Der Ausschluß von Sauerstoff läßt sich am besten dadurch erreichen, daß man das zu polymerisierende Gemisch zum Sieden erhitzt und gegebenenfalls zusätzlich in einer Inertgasatmosphäre arbeitet, indem beispielsweise Stickstoff durch die Reaktionsmischung geleitet wird. Die Polymerisationstemperatur kann in einem weiten Bereich variiert werden, z.B. von etwa 20 bis 200, vorzugsweise 50 bis 150°C.

In einigen Fällen kann es auch vorteilhaft sein, zur völligen Entfernung von gelöstem Sauerstoff geringe Mengen - 0,1 bis 1 Gew.-%, bezogen auf die Monomermischung - eines Reduktionsmittels wie Natriumsulfit, Natriumpyrosulfit, Natriumdithionit, Ascorbinsäure oder Mischungen der Reduktionsmittel zuzusetzen.

Bei einer besonders bevorzugten Ausführungsform der Fällungspolymerisation wird das wasserlösliche Comonomere (vorzugsweise ein N-Vinyllactam, wie N-Vinylpyrrolidon) ein Teil des Vernetzers, Wasser und gegebenenfalls ein Puffer und ein Reduktionsmittel in einem schwachen Stickstoffstrom erhitzt, bis sich die ersten Polymerisateteilchen zeigen. Dann wird eine vorher durch Einblasen von Stickstoff inertisierte Mischung aus einem N-Vinylamid, vorzugsweise N-Vinylformamid und dem restlichen Vernetzer und gegebenenfalls Wasser als Verdünnungsmittel innerhalb von 0,2 bis 2 Stunden zugegeben. Diese Arbeitsweise hat den Vorteil, daß die Popcornpolymerisation nur kurze Zeit in Anspruch nimmt. Die Popcorn-Polymerisate können aus der wäßrigen Lösung isoliert, gereinigt und anschließend hydrolysiert werden. Es ist jedoch auch möglich, die wäßrige Suspension der Popcorn-Polymerisate direkt zu hydrolysieren. Die Popcorn-Polymerisate fallen üblicherweise mit einer Ausbeute von etwa 90 bis > 99 % der theoretischen Ausbeute an. Sie können aus der wäßrigen Suspension durch Filtrieren oder Zentrifugieren mit anschließendem Auswaschen mit Wasser und Trocknen in üblichen Trocknern wie Umluft- oder Vakuumtrockenschrank, Schaufeltrockner oder Stromtrockner isoliert werden. Die Popcorn-Polymerisate sind in Wasser und allen Lösemitteln praktisch nicht löslich und quellen darin auch nur geringfügig.

Die erfindungsgemäßen unlöslichen, nur wenig quellbaren Polymerisate mit Aminogruppen werden in der zweiten Stufe des Herstellverfahrens hydrolysiert, wobei aus mindestens 2 % der einpolymerisierten Einheiten der Struktur I die Gruppe R-CO- unter Ausbildung von Einheiten der Struktur II abgespalten wird.

Die hydrolytische Spaltung der in den Popcorn-Polymerisaten enthaltenden Carbonsäureamidfunktionen I verläuft unerwartet glatt. Ein chemisch und physikalisch vernetztes Polymerisat sollte aufgrund seiner Unlöslichkeit in Lösemitteln auch nur sehr schwer, wenn überhaupt von Solvolysereagenzien angegriffen werden. Tatsachlich erhält man jedoch in Abhängigkeit von den Reaktionsbedingungen, d.h. der Menge an Hydrolysemittel sowie der Reaktionszeit und -temperatur sehr leicht entweder eine partielle oder vollständige Hydrolyse der Amidfunktionen I. Die Hydrolyse der Popcorn-Polymerisate wird soweit geführt, daß 2 bis 100 % der in den Polymerisaten enthaltenen N-Vinylcarbonsäureamideinheiten I, vorzugsweise 20 bis 90 % dieser Einheiten hydrolysiert sind. Als Hydrolysemittel werden vorzugsweise Säuren oder Basen eingesetzt.

Geeignete Säuren sind beispielsweise Mineralsäuren, wie Halogenwasserstoff (gasförmig oder in wäßriger Lösung), Schwefelsäure, Salpetersäure, Phosphorsäure (ortho-, meta- oder Polyphosphorsäure) und organische Säuren, z.B. C₁- bis C₅-Carbonsäuren, wie Ameisensäure, Essigsäure oder Propionsäure oder die aliphatischen oder aromatischen Sulfonsäuren, wie Methansulfonsäure, Benzolsulfonsäure oder Toluolsulfonsäure. Vorzugsweise verwendet man zur Hydrolyse Salzsäure oder Schwefelsäure. Bei der Hydrolyse mit Säuren beträgt der pH-Wert 0 bis 5. Pro Formylgruppenäquivalent im Polymerisat benötigt man üblicherweise 0,05 bis 2,0 Äquivalente an Säure, vorzugsweise 0,4 bis 1,2.

Bei der Hydrolyse mit Basen können Metallhydroxide von Metallen der ersten und zweiten Hauptgruppe des Periodischen Systems verwendet werden, beispielsweise eignen sich Lithiumhydroxid, Natriumhydroxid, Kaliumhydroxid, Magnesiumhydroxid, Calciumhydroxid, Strontiumhydroxid und Bariumhydroxid. Geeignet sind auch Carbonate wie z.B. Natriumcarbonat, Kaliumcarbonat, Magnesiumcarbonat, Calciumcarbonat, Strontiumcarbonat und Bariumcarbonat. Ebenso können aber auch Ammoniak und Alkylderivate des Ammoniaks verwendet werden, z.B. Alkyl- oder Arylamine, z.B. Triethylamin, Monoethanolamin, Diethanolamin, Triethanolamin, Morpholin oder Anilin. Bei der Hydrolyse mit Basen beträgt der pH-Wert 8 bis 14. Die Basen können in festem, flüssigem oder gegebenenfalls auch in gasförmigem Zustand verdünnt oder unverdünnt eingesetzt werden. Vorzugsweise verwendet man als Basen für die Hydrolyse Ammoniak, Natronlauge oder Kalilauge.

Die Abspaltung der Gruppen 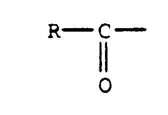 aus den einpolymerisierten Einheiten der Struktur I kann auch mit Hilfe von Enzymen vorgenommen werden. Geeignete Enzyme sind z.B. Proteasen, Amidasen und Ureasen.

Sie werden vorzugsweise in Mengen von 0,1 bis 20 Gew.-%, bezogen auf die Menge einpolymerisierbarer Amidstrukturen angewendet.

Die Abspaltung der Gruppen 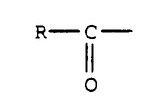 aus den Popcorn-Polymerisaten mit Einheiten der Struktur I erfolgt vorzugsweise in wäßriger Suspension mit einem Feststoffgehalt von 0,1 bis 50 Gew.-%, vorzugsweise 1 bis 20 Gew.-%. Besonders bewährt hat sich eine Verfahrensweise, bei der zur Hydrolyse die Basen oder Säuren in wäßriger Lösung zugesetzt werden. Die Hydrolyse im sauren oder im alkalischen pH-Bereich erfolgt bei Temperaturen von 30 bis 170, vorzugsweise 50 bis 110°C. Es empfiehlt sich, die Suspension kräftig zu rühren, um Agglomeration zu vermeiden. Die Reaktionszeit beträgt 1 bis 30, vorzugsweise 6 bis 20 Stunden.

Der Hydrolysegrad wird durch quantitative Analyse der bei der Reaktion freigesetzten Carbonsäure, insbesondere Ameisensäure, bestimmt.

Nach saurer Hydrolyse liegen die, Aminfunktionen enthaltenden Popcorn-Polymerisate, in der Regel als Salze vor, wobei als Gegenion die entsprechenden Säureanionen oder Anionen der freigesetzten Carbonsäuren, beispielsweise Formiat, in Frage kommen. Um partiell oder vollständig freie Amine zu erhalten, werden die Polymerisate in wäßriger Suspension durch Zugabe von Basen deprotoniert. Geeignete Basen sind vor allem Alkali- und Erdalkalihydroxide, insbesondere Natriumhydroxid, Alkali- und Erdalkalicarbonate, insbesondere Natriumcarbonat, Ammoniak und Alkylderivate des Ammoniaks. Die bei der Neutralisation gebildeten Salze, beispielsweise Natriumchlorid, verbleiben in wäßriger Lösung. Nach basischer Hydrolyse liegen die, Aminfunktionen enthaltenden Popcorn-Polymerisate als freie Basen vor. Um daraus partiell oder vollständig die Salzform zu erhalten werden die hydrolysierten Popcorn-Polymerisate in wäßriger Suspension mit Säuren protoniert. Geeignete Säuren sind beispielsweise Mineralsäuren, vorzugsweise Salzsäure, organische Säuren, z.B. C₁-C₅-Carbonsäuren oder aliphatische oder aromatische Sulfonsäuren.

Die hydrolysierten Popcorn-Polymerisate, die primäre oder sekundäre Aminogruppen aufweisen, können gegebenenfalls quaternisiert werden. Hierfür verwendet man die üblichen Quaternisierungsmittel wie Alkylhalogenide, z.B. Methylchlorid, Ethylchlorid, Dodecylchlorid oder Benzylchlorid, oder Dialkylsulfate wie Dimethylsulfat oder Diethylsulfat.

Die Isolierung der Vinylamineinheiten einpolymerisiert enthaltenden Popcorn-Polymeren aus der wäßrigen Suspension kann durch Filtrieren oder Zentrifugieren mit anschließendem Auswaschen mit Wasser und Trocknen in üblichen Trocknern wie Umluft- oder Vakuumtrockenschrank, Schaufeltrockner oder Stromtrockner erfolgen.

Unlösliche, Aminogruppen tragende Popcorn-Polymere eignen sich dazu, Metallionen aus Lösungen in Lösungsmittel jeder Art zu entfernen. Vorzugsweise wird das Verfahren jedoch auf wäßrige Lösungen von Metallionen, z.B. Alkali-,und Erdalkali-Metallionen, insbesondere Schwermetallionen, z.B. Cu²⁺, Fe²⁺, Ni²⁺ und Zn²⁺ angewandt. Die Anionen der Metallsalze haben kaum einen Einfluß auf die Entfernbarkeit der Metallionen aus Lösungen.

Die Menge an Aminogruppen enthaltenden hydrolysierten Popcorn-Polymerisaten wird so gewählt, daß die molmäßige Anzahl an zur Verfügung stehenden Aminogruppen der Anzahl an Metallionen in der Lösung zumindest äquivalent ist. Vorzugsweise arbeitet man mit einem Überschuß an Aminogruppen. Zur weitgehenden Komplexierung der Metallionen sollten dabei 2 bis 100 Mol%, vorzugsweise mehr als 50 Mol% der Aminfunktion als freie Base vorliegen. Zweckmäßigerweise geht man so vor, daß man einer Metallsalzlösung ein hydrolysiertes Popcorn-Polymerisat mit entsprechender Menge freier Aminogruppen zusetzt. Es ist aber auch möglich, solche Popcorn-Polymerisate in Salzform in der Metallsalzlösung zu suspendieren und durch Zugabe von Basen, beispielsweise Natronlauge oder Ammoniak, den pH-Wert der Lösung zu erhöhen und die Ammoniumgruppen im hydrolysierten Popcorn-Polymerisat dadurch zu deprotonieren. Eine merkliche Komplexierung ist im Fall von Cu²⁺ bereits bei pH-Werten oberhalb von 3 zu bemerken.

Das Komplexierungsvermögen der Aminogruppen tragenden Popcorn-Polymeren wird durch quantitative Analyse der in Lösung verbliebenen Metallionen bestimmt. Als Analysenmethode eignet sich z.B. die komplexometrische Titration oder die Atomabsorptionsspektroskopie, gegebenenfalls auch die Spektralphotometrie.

### Beispiele

### Beispiel 1

In einer Rührapparatur werden 450 g destilliertes Wasser, 50 g N-Vinylpyrrolidon, 1 g N,N'-Divinylethylenharnstoff und 0,05 g Natriumhydroxid unter Einleiten eines schwachen Stickstoffstromes auf 600C erhitzt. Nun werden 0,1 g Natriumdithionit gelöst in 10 g destilliertem Wasser zugesetzt. Die Mischung wird auf 60°C erwarmt und auf dieser Temperatur gehalten. Nach 20 Minuten bilden sich weiße Flocken. Nun wird innerhalb von 20 Minuten eine Lösung von 3 g N,N'-Divinylethylenharnstoff in 150 g N-Vinylformamid gleichmäßig zudosiert. Die weißen Flocken gehen in eine Polymerisatsuspension über, die langsam hochviskos wird. Innerhalb von 2 Std. wird, um den Ansatz rührbar zu halten, mit 1000 ml dest. Wasser verdünnt. Anschließend wird noch 1 Std. bei 60°C nacherhitzt und dann gekühlt. Die viskose Suspension wird nun abfiltriert und mit Wasser gewaschen (ca. 2000 ml), um Verunreinigungen wie lösliches Polymer und Monomere zu entfernen. Das feuchte Gut hat einen Feststoffgehalt von 40,3, die Ausbeute an Popcorn-Polymerisat beträgt 96 %.

### Hydrolysiertes Popcorn-Polymerisat 1

100 g des oben beschriebenen feuchten Popcornpolymerisates werden in einem Rührkolben in 650 g Wasser suspendiert und mit 48 g 38 %iger Salzsäure versetzt. Unter kräftigem Rühren wird die Suspension 15 Stunden lang auf 80°C erhitzt. Der Hydrolysegrad wird durch enzymatische Analyse der freigesetzten Ameisensäure kontrolliert. Nach Reaktionsende kühlt man den Ansatz auf Raumtemperatur ab, saugt den Feststoff ab, wäscht ihn ausgiebig mit Wasser und trocknet ihn im Vakuumtrockenschrank bei 70°C. Man erhält 50 g weißes Festprodukt mit einem Feststoffgehalt von 83 %. Der Hydrolysegrad der einpolymerisierten N-Vinylformamideinheiten beträgt 78 %.

### Hydrolysiertes Popcornpolymerisat 2

100 g des nach Beispiel 1 hergestellten, feuchten, noch nicht hydrolysierten Popcorn-Polymerisates werden in einem Rührkolben in 650 g Wasser suspendiert und 40 g 50 %ige Natronlauge zugegeben. Unter intensivem Rühren wird die Suspension 15 Stunden lang auf 80°C erhitzt. Der Hydrolysegrad wird durch enzymatische Analyse des freigesetzten Formiats kontrolliert. Nach Abkühlen auf Raumtemperatur wird der Feststoff abgesaugt, ausgiebig mit Wasser gewaschen und im Vakuumtrockenschrank bei 70°C getrocknet. Man erhält 33 g weißes basisches Produkt mit einem Feststoffgehalt von 91 %. Der Hydrolysegrad de einpolymerisierten Vinylformamideinheiten beträgt 82 %.

### Beispiel 2

In einer Rührapparatur werden 800 g destilliertes Wasser, 180 g N-Vinylformamid, 20 g N-Vinylpyrrolidon, 4 g N,N'-Divinylethylenharnstoff und 0,05 g Natriumhydroxid unter Einleiten eines schwachen Stickstoffstromes auf 60°C erhitzt. Nun werden 0,4 g Natriumdithionit, gelöst in 10 g destilliertem Wasser auf einmal zugesetzt und die Temperatur bei 60°C gehalten. Nach 15 Minuten entstehen feine Flocken, die nach 4 Std. einen dicken Brei von Polymerisatteilchen in Wasser ergeben. Nun wird noch 3 Std. bei 60°C weitererhitzt, abgekühlt, abfiltriert und mit Wasser gewaschen. Der Feststoffgehalt des Gutes beträgt 41,2 %. Die Ausbeute an Popcorn-Polymerisat beträgt 97,8 %.

### Hydrolysiertes Popcorn-Polymerisat 3

100 g des oben beschriebenen feuchten Popcorn-Polymerisates werden in einem Rührkolben in 650 g Wasser suspendiert und mit 60 g 38 %iger Salzsäure versetzt. Unter intensivem Rühren erhitzt man die Suspension 12 Stunden lang auf 90°C. Daraufhin kühlt man den Ansatz ab, saugt den Feststoff ab und wäscht ihn ausgiebig mit Wasser. Nach Trocknen im Vakuumtrockenschrank bei 70°C erhält man 50 g Polymeres mit einem Hydrolysegrad der einpolymerisierten N-Vinylformamideinheiten von 79 % und einen Feststoffgehalt von 95 %.

### Beispiel 3

In einer Rührapparatur werden 960 g destilliertes Wasser, 0,1 g Natriumhydroxid, 40 g N-Vinylpyrrolidon und 0,8 g N,N'-Divinylethylenharnstoff unter Einleiten von Stickstoff auf 60°C erhitzt. Nun werden 0,2 g Natriumdithionit zugesetzt. Die Temperatur des Reaktionsgemisches wird bei 60°C gehalten. Nach etwa 30 Minuten sind einzelne weiße Flocken im Ansatz erkennbar. Nun wird eine Lösung von 7,2 g N,N'-Divinylethylenharnstoff in 360 g N-Vinylformamid innerhalb von 30 Minuten gleichmäßig zudosiert, wobei die Flocken weiter zunehmen. Das Gemisch wird noch 3 Std. bei 60°C gehalten und anschließend wegen Zunahme der Viskosität der Polymerisatsuspension mit 2500 g destilliertem Wasser verdünnt. Nach Abkühlen auf Raumtemperatur wird das Polymerisat abfiltriert und mit ca. 5 1 Wasser gewaschen. Der Feststoffgehalt der Polymerisatteilchen beträgt 28 %. Die Ausbeute an Popcorn-Polymerisat beträgt 99,4 %.

### Hydrolysiertes Popcorn-Polymerisat 4

100 g des oben beschriebenen feuchten Popcorn-Polymerisates werden in einem Rührkolben in 650 g Wasser suspendiert und mit 30 g 70 %iger Schwefelsäure versetzt. Unter kräftigem Rühren erhitzt man die Suspension 10 Stunden lang auf 80°C. Nach Abkühlung auf Raumtemperatur wird die Festsubstanz abgesaugt und mit Wasser nachgewaschen, bis im Waschwasser kein Sulfat mehr nachweisbar ist. Nach Trocknen im Vakuumtrockenschrank erhalt man 36 g Popcorn-Polymeres mit einem Hydrolysegrad von 95 % der einpolymerisierten N-Vinylformamidgruppen und einen Feststoffgehalt von 96 %.

### Anwendungstechnische Beispiele

### Komplexierung von Cu²⁺

150 ml einer 0,02 molaren Kupfersulfatlösung (= 3,0 mmol Cu²⁺) werden mit 2,2 g fein zerriebenem hydrolysiertem Popcorn-Polymerisat 4 (= 22,0 mmol protonierte Aminfunktion) versetzt. Nach 15 min Rühren bei Raumtemperatur wird durch tropfenweisen Zusatz von 5 g 7 %iger Natronlauge (= 8,75 mmol) ein pH-Wert von 5 eingestellt. Man läßt 1 Stunde bei Raumtemperatur rühren, wobei das Polymerisat schnell eine tiefblaue Färbung annimmt. Zur Analyse der in Lösung verbliebener Restmenge an Kupfer wird ein Aliquot der überstehenden Lösung mit Ammoniak versetzt, die Extinktion des blauen Kupfer-tetraminkomplexes photometrisch bestimmt und die entsprechenden Kupfermenge anhand einer Eichkurve ermittelt.

Die Abreicherung der Cu²⁺-Ionen in der Lösung beträgt 97 mol%.

### Komplexierung von Ni²⁺

150 ml einer 0,02 molaren Nickelsulfatlösung (= 3,0 mmol Ni²⁺) wird mit 2,2 g fein zerriebenem hydrolysiertem Popcornpolymerisat 4 (= 22,0 mmol protonierte Aminfunktion) versetzt. Nach 15 min Rühren bei Raumtemperatur wird durch tropfenweisen Zusatz von 6 g 7 %iger Natronlauge (= 10,5 mmol) ein pH-Wert von 7 eingestellt. Man läßt 1 Stunde bei Raumtemperatur rühren und bestimmt die in Lösung verbliebene Ni²⁺-Menge durch komplexometrische Titration.

Die Abreicherung beträgt 62 mol%.

### Komplexierung von Zn²⁺

150 ml einer 0,02 molaren Zinksulfatlösung (= 3,0 mmol Zn²⁺) wird mit 2,2 g fein zerriebenem hydrolysiertem Popcornpolymerisat 4 (= 22,0 mmol protonierte Aminfunktion) versetzt. Nach 15 min Rühren bei Raumtemperatur wird durch tropfenweisen Zusatz 6 g 7 %iger Natronlauge (= 10,5 mmol) ein pH-Wert von 7 eingestellt. Man läßt 1 Stunde bei Raumtemperatur rühren und bestimmt die in Lösung verbleibene Zn²⁺-Menge durch komplexometrische Titration.

Die Abreicherung beträgt 48 mol%.

## Patentansprüche

1. Unlösliche, nur wenig quellbare Polymerisate mit Aminogruppen, dadurch gekennzeichnet, daß sie aus Popcorn-Polymerisaten, die Einheiten der Struktur 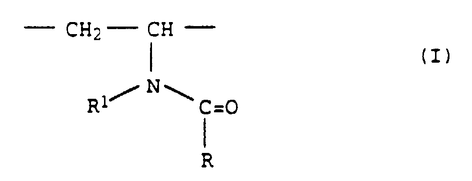 enthalten, in der R, R¹ = H oder C₁- bis C₄-Alkyl bedeuten, durch Abspaltung der Gruppe 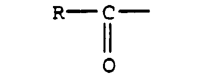 aus mindestens 2 % der einpolymerisierten Einheiten der Struktur I unter Ausbildung von Einheiten der Struktur 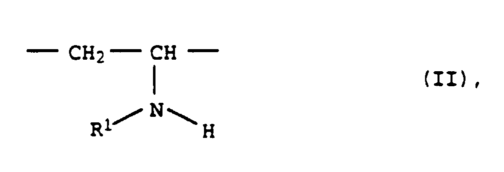 in der R¹ = H oder C₁- bis C₄-Alkyl ist, erhältlich sind.

2. Verfahren zur Herstellung von unlöslichen, nur wenig quellbaren Polymerisaten mit Aminogruppen nach Anspruch 1, dadurch gekennzeichnet, daß man
(a) N-Vinylcarbonsäureamide der Formel 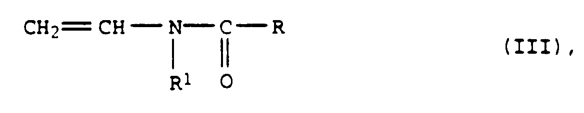 in der R, R¹ = H oder C₁- bis C₄-Alkyl bedeuten, und gegebenenfalls
(b) andere, damit copolymerisierbare monoethylenisch ungesättigte Monomere mit
(c) 0,1 bis 10 Gew.-%, bezogen auf die bei der Polymerisation eingesetzten Monomeren (a) und (b), einer mindestens zwei ethylenisch ungesättigte Doppelbindungen enthaltenden Verbindung als Vernetzer
unter Ausschluß von Sauerstoff und Polymerisationsinitiatoren zu Popcorn-Polymerisaten polymerisiert und aus mindestens 2 % der einpolymerisierten N-Vinylcarbonsäureamide der Formel III die Gruppe 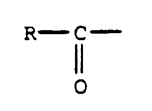 durch Einwirkung von Enzymen, Säuren oder Basen abspaltet.

3. Verfahren nach Anspruch 2, dadurch gekennzeichnet, daß man als Monomer (a) N-Vinylformamid einsetzt.

4. Verfahren nach Anspruch 2 oder 3, dadurch gekennzeichnet, daß man (a) N-Vinylformamid und (c) N,N'-Divinylethylenharnstoff zu Popcompolymerisaten polymerisiert und aus 2 bis 100 % der darin enthaltenen einpolymerisierten N-Vinylformamideinheiten die Formylgruppe unter Ausbildung von primären Aminogruppen abspaltet.

5. Verwendung der unlöslichen, nur wenig quellbaren Polymerisate mit Aminogruppen nach Anspruch 1 als Ionenaustauscher oder Adsorberharz für Metallionen.

## Revendications

1. Polymères insolubles à groupements amino, ne pouvant gonfler que faiblement, caractérisés en ce qu'ils peuvent être obtenus à partir de polymères popcorn qui contiennent des motifs de structure 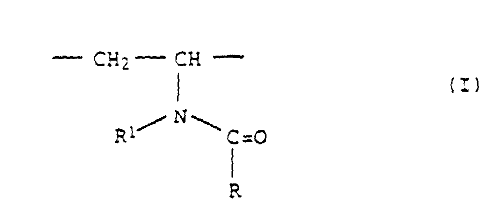 dans laquelle R, R¹ signifient un atome d'hydrogène ou un groupement alkyle en C₁-C₄, par clivage du groupement 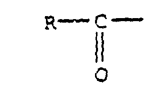 d'au moins 2% des motifs en liaison polymère de structure (I) par formation de motifs de structure 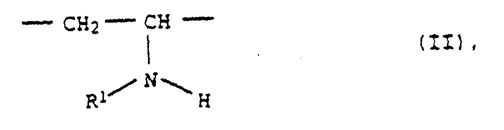 dans laquelle R¹ est un atome d'hydrogène ou un groupement alkyle en C₁-C₄

2. Procédé de fabrication de polymères insolubles, à groupements amino, ne pouvant gonfler que faiblement, selon la revendication 1, caractérisé en ce qu'on polymérise
a) les amides N-vinyliques d'acides carboxyliques de formule 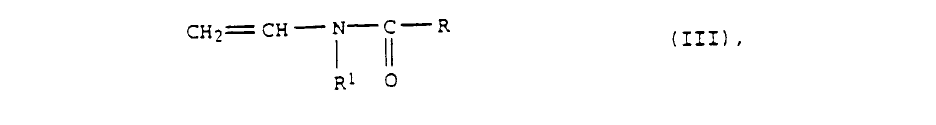 dans laquelle R,R¹ signifient un atome d'hydrogène ou un groupement alkyle en C₁-C₄ et éventuellement
b) d'autres monomères, copolymérisables avec eux, à insaturation monoéthylénique avec
c) 0,1 à 10 % en poids, par rapport aux monomères (a) et (b) utilisés dans la polymérisation, d'un composé utilisé comme réticulant et contenant au moins deux doubles liaisons éthyléniques insaturées
à l'exclusion d'oxygène et d'amorceurs de polymérisation, pour obtenir des polymères popcorn et, à partir d'au moins 2 % des amides N-vinyliques d'acides carboxyliques de formule (III) en liaison polymère, on clive le groupement 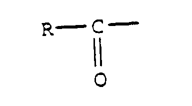 par l'action d'enzymes, d'acides ou de bases.

3. Procédé selon la revendication 2, caractérisé en ce qu'on utilise le N-vinylformamide en tant que monomère (a).

4. Procédé selon la revendication 2 ou 3, caractérisé en ce qu'on polymérise (a) du N-vinylformamide et (c) du N,N'-divinylcarbamide d'éthylène pour obtenir des polymères popcorn et, à partir de 2 à 100% des motifs N-vinylformamide en liaison polymère qu'ils contiennent, on clive les groupements formyle par formation de groupements amine primaire.

5. Utilisation des polymères insolubles à groupements amino, ne pouvant gonfler que faiblement, selon la revendication 1, comme échangeur d'ions ou résine d'adsorption pour ions métalliques.

## Claims

1. Insoluble, only slightly swellable polymers containing amino groups, characterized in that they are obtainable from popcorn polymers that contain units of the structure 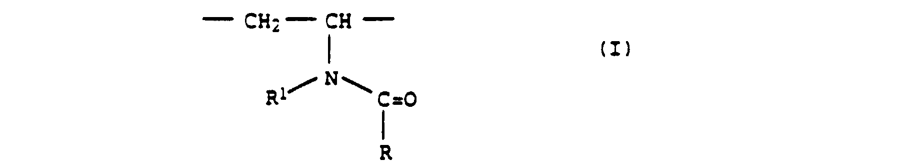 where R and R¹ are H or C₁-C₄-alkyl, by eliminating the group 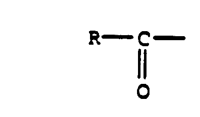 from at least 2% of the incorporated units of the structure I, with the formation of units of the structure 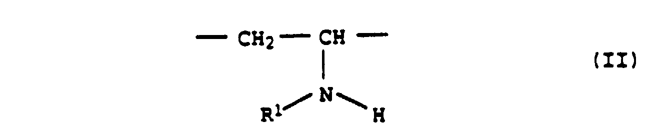 where R¹ is H or C₁-C₄-alkyl.

2. A process for preparing insoluble, only slightly swellable polymers containing amino groups as claimed in claim 1, characterized in that
(a) N-vinylcarboxamides of the formula 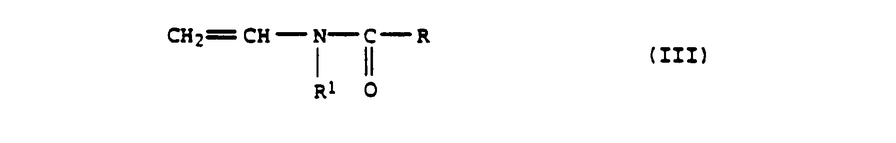 where R and R¹ are H or C₁-C₄-alkyl, and if desired
(b) other monoethylenically unsaturated monomers copolymerizable therewith are polymerized with
(c) from 0.1 to 10 % by weight, based on the monomers (a) and (b) used in the polymerization, of a compound containing at least two ethylenically unsaturated double bonds as crosslinking agent,
with exclusion of oxygen and polymerization initiators to form popcorn polymers, and the group 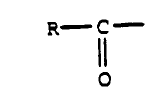 is eliminated from at least 2% of the copolymerized N-vinylcarboxamides of the formula III by the action of enzymes, acids or bases.

3. A process as claimed in claim 2, characterized in that the monomer (a) is N-vinylformamide.

4. A process as claimed in claim 2 or 3, characterized in that (a) N-vinylformamide and (c) N,N'-divinylethyleneurea are polymerized to form popcorn polymers and the formyl group is eliminated from 2 to 100 % of the N-vinylformamide units contained therein, with the formation of primary amino groups.

5. The use of an insoluble, only slightly swellable polymer containing amino groups as claimed in claim 1, as an ion exchanger or adsorber resin for metal ions.
